# EUROPÄISCHE PATENTSCHRIFT

(11) **EP 2 709 883 B1**
(45) Veröffentlichungstag und Bekanntmachung des Hinweises auf die Patenterteilung: **24.06.2015**
(21) Anmeldenummer: 12711136.7
(22) Anmeldetag: 20.03.2012
(51) Int. Cl.: B60T 1/10

(54) **STEUERVORRICHTUNG FÜR EIN BREMSSYSTEM EINES FAHRZEUGS UND VERFAHREN ZUM BETREIBEN EINES BREMSSYSTEMS EINES FAHRZEUGS**
CONTROL DEVICE FOR A VEHICLE BRAKE SYSTEM, AND METHOD FOR OPERATING A VEHICLE BRAKE SYSTEM
DISPOSITIF DE COMMANDE D'UN SYSTÈME DE FREINAGE D'UN VÉHICULE ET PROCÉDÉ DE FONCTIONNEMENT D'UN SYSTÈME DE FREINAGE D'UN VÉHICULE

(30) Priorität: 17.05.2011 DE 102011075983
(43) Veröffentlichungstag der Anmeldung: 26.03.2014
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE)
(86) Internationale Anmeldenummer: PCT/EP2012/054890
(87) Internationale Veröffentlichungsnummer: WO 2012/156130

(56) Entgegenhaltungen:
- DE-A1- 19 604 134
- US-A1- 2007 013 230

## Beschreibung

Die Erfindung betrifft eine Steuervorrichtung für ein Bremssystem eines Fahrzeugs. Des Weiteren betrifft die Erfindung ein Verfahren zum Betreiben eines Bremssystems eines Fahrzeugs.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von der mindestens einen Radbremszange der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Auslassventile der hydraulischen Bremsanlage das aus dem Hauptbremszylinder verschobene Druckmittel über die mindestens eine Radbremszange in mindestens eine Speicherkammer überführt wird. Auf diese Weise soll eine von dem elektrischen Antrieb ausgeführte regenerative Abbremsung verblendbar sein.

### Offenbarung der Erfindung

Die Erfindung schafft eine Steuervorrichtung für ein Bremssystem eines Fahrzeugs mit den Merkmalen des Anspruchs 1 und ein Verfahren zum Betreiben eines Bremssystems eines Fahrzeugs mit den Merkmalen des Anspruchs 9.

### Vorteile der Erfindung

Die vorliegende Erfindung gewährleistet den Vorteil, dass ein Verblenden des festgelegten Soll-Generator-Bremsmoments ausführbar ist, während eine Kraftübertragung zwischen dem Bremsbetätigungselement und dem Hauptbremszylinder-Kolben nicht vorliegt/unterbunden ist. Somit spürt der Fahrer bei der Betätigung des Bremsbetätigungselements keinen Unterschied, wenn das aus dem Hauptbremszylinder transferierte Bremsflüssigkeitsvolumen in die Speicherkammer, und nicht in die mindestens eine zugeordnete Radbremszange verschoben wird. Die Erfindung gewährleistet somit einen vorteilhaften Bedienkomfort des Bremsbetätigungselements für den Fahrer.

Der in dem oberen Absatz beschriebene Vorteil ist gewährleistbar, ohne dass dazu die "Federcharakteristiken" der mindestens einen Radbremszange und der zugeordneten Speicherkammer aneinander angepasst werden müssen. Somit ist es bei der vorteilhaften Erfindung nicht notwendig, die Feder in der Speicherkammer an die mindestens eine zugeordnete Radbremszange anzupassen. Dies ist besonders vorteilhaft, da eine an mindestens eine Radbremszange angepasste Federcharakteristik der Speicherkammer kaum zufriedenstellend und/oder nur zu extrem hohen Kosten realisierbar ist.

Der mittels der vorliegenden Erfindung realisierbare Vorteil ist auf einfache Weise gewährleistbar, indem das Bremsbetätigungselement derart an den Hauptbremszylinder angeordnet wird, dass während des Betätigens des Bremsbetätigungselements mit einer Betätigungsstärke ungleich null aber unter der Mindestbetätigungsstärke, bei welcher die auf das Bremsbetätigungselement aufgebrachte Fahrerbremskraft auf den Hauptbremszylinder-Kolben übertragbar ist, eine Kraftübertragung zwischen dem Bremsbetätigungselement und Hauptbremszylinder-Kolben nicht vorliegt/unterbunden ist. Gleichzeitig hat der Fahrer bei der vorliegenden Erfindung die Möglichkeit, mittels eines Betätigens des Bremsbetätigungselements mit zumindest der Mindestbetätigungsstärke direkt in den Hauptbremszylinder hinein zu bremsen. Somit ist selbst bei einer Funktionsbeeinträchtigung des Bremskraftverstärkers, beispielsweise aufgrund einer Beeinträchtigung der Stromversorgung des Bremssystems, noch ein sicheres Abbremsen des Fahrzeugs gewährleistet.

Das mittels der vorliegenden Erfindung realisierbare Bremssystem ist als ein mit einem minimalen Änderungsaufwand erweitertes Einfachsystem umschreibbar. Damit ist es möglich, eine ausreichende rekuperative Effizienz bei minimalen Mehrkosten zu erzielen.

Die Steigerung der rekuperativen Effizienz ist bei der vorliegenden Erfindung hauptsächlich darin begründet, dass das vorgeschlagene Bremssystem den Fahrer bei der Modulationsaufgabe im Falle eines entfallenden regenerativen Bremsmoments unterstützt. Die erfindungsgemäße Technologie ist in der Lage, auf ein reduziertes rekuperatives Bremsmoment der rekuperativen Bremse, beispielsweise aufgrund eines vollen Energiespeichers und/oder einer Fahrzeuggeschwindigkeit unter der zum rekuperativen Bremsen benötigten Mindestgeschwindigkeit, zu reagieren. Insbesondere ist dies ausführbar, ohne dass der Bremsweg verlängert wird oder der Fahrer eine Rückwirkung bei der Betätigung des Bremsbetätigungselements bemerkt.

Es wird darauf hingewiesen, dass die Ausführbarkeit der erfindungsgemäßen Technologie keinen an dem Bremsbetätigungselement, dem Bremskraftverstärker oder in dem Hauptbremszylinder ausgebildeten Leerweg erfordert. Somit kann der Fahrer auch in der Rückfallebene schnell in das Bremssystem einbremsen.

Die erfindungsgemäße Technologie ermöglicht ein Verblenden während eines Nichtvorliegens/einer Unterbindung einer Kraftübertragung zwischen dem Bremsbetätigungselement und dem Hauptbremszylinder-Kolben. Somit ist für den Fahrer kein verändertes Bremsgefühl bei einem regenerativen Bremsen anstelle eines hydraulischen Bremsens wahrnehmbar. Aufgrund der nicht-vorliegenden/unterbundenen Kraftübertragung zwischen dem Hauptbremszylinder-Kolben und dem Bremsbetätigungselement, beispielsweise aufgrund einer fehlenden mechanischen Kopplung bei einer Betätigungsstärke unter dem Mindestbetätigungsstärke, stützt sich die durch den hydraulischen Druckaufbau verursachte Gegenkraft nicht am Bremsbetätigungselement, sondern lediglich an der Verstärkungskraft des Bremskraftverstärkers ab. Die Veränderung der Gegenkraft ist somit für den Fahrer am Bremsbetätigungselement nicht wahrnehmbar.

Man kann dies auch als ein Verblenden innerhalb des Jump-In-Bereichs (des Bremskraftverstärkers) bezeichnen. Der Jump-In-Bereich stellt einen Betätigungsbereich des Bremskraftverstärkers, wie beispielsweise eines Vakuum-Boosters, dar, bei welchem keine mechanische Kopplung zwischen dem Bremsbetätigungselement und dem Hauptbremszylinder-Kolben existiert. Trotzdem wird bereits im Jump-In-Bereich in den Hauptbremszylinder gebremst. Somit weist das Bremssystem keinen Leerweg auf und ist insbesondere in der Rückfallebene sicher betreibbar.

Mittels der erfindungsgemäßen Technologie können auch Bremsanforderungen ohne eine Betätigung des Bremsbetätigungselements (aktive Druckaufbauten) ausgeführt werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2: eine schematische Darstellung eines Bremssystems mit der Steuervorrichtung;
- Fig. 3: ein Flussdiagramm zum Darstellen einer ersten Ausführungsform des Verfahrens; und
- Fig. 4: ein Flussdiagramm zum Darstellen einer zweiten Ausführungsform des Verfahrens.

### Ausführungsformen der Erfindung

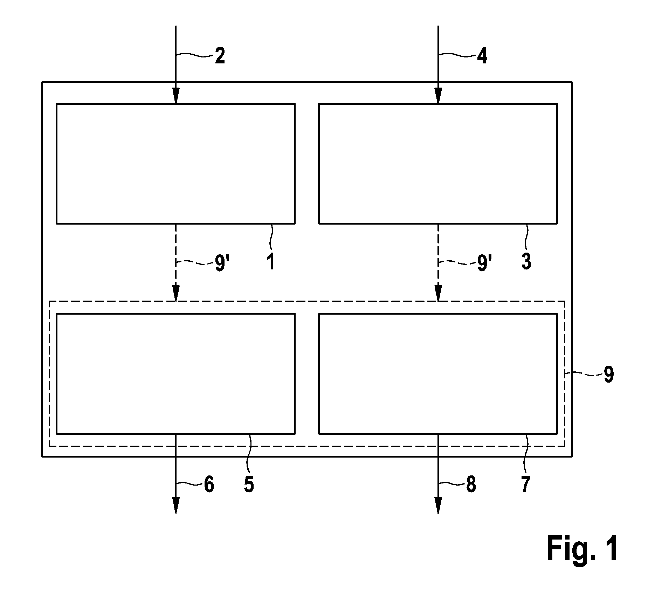

Fig. 1 zeigt eine schematische Darstellung einer Ausführungsform der Steuervorrichtung.

Die in Fig. 1 schematisch wiedergegebene Steuervorrichtung ist für ein Bremssystem eines Fahrzeugs verwendbar. Die Steuervorrichtung weist eine erste Empfangseinrichtung 1 auf, mittels welcher ein Sensorsignal 2 bezüglich einer Betätigungsstärke einer Betätigung eines (nicht skizzierten) Bremsbetätigungselements des Bremssystems empfangbar ist. Zusätzlich hat die Steuervorrichtung eine zweite Empfangseinrichtung 3, mittels welcher ein Informationssignal 4 bezüglich mindestens eines ausführbaren Kann-Generator-Bremsmoments eines (nicht dargestellten) Generators des Bremssystems empfangbar ist.

Eine Generatorsteuereinrichtung 5 der Steuervorrichtung ist dazu ausgelegt, unter Berücksichtigung des Sensorsignals 2 und des Informationssignals 4 ein Soll-Generator-Bremsmoment des Generators festzulegen und ein dem Soll-Generator-Bremsmoment entsprechendes Generator-Steuersignal 6 an den Generator auszugeben. Das Soll-Generator-Bremsmoment ist mittels der Generatorsteuereinrichtung 5 unter Berücksichtigung des Informationssignals 4 und einer Funktion einer aus dem Sensorsignal 2 hergeleiteten Größe festlegbar. Die aus dem Sensorsignal 2 hergeleitete Größe kann beispielsweise ein Bremsweg, eine Bremskraft und/oder ein Bremsdruck, bzw. mindestens eine entsprechende Größe bezüglich der Betätigungsstärke der Betätigung des Bremsbetätigungselements, sein. Die Funktion gibt vorzugsweise ein bevorzugtes Generator-Bremsmoment an. Ein Maximum der Funktion liegt bei einer aus dem Sensorsignal hergeleiteten Größe gleich einer Mindestbetätigungsstärke, ab welcher eine auf das Bremsbetätigungselement aufgebrachte Fahrerbremskraft auf einen verstellbaren Hauptbremszylinder-Kolben eines (nicht skizzierten) Hauptbremszylinders übertragbar ist.

Bei einer Betätigungsstärke unter der Mindestbetätigungsstärke, wenn eine Kraftübertragung zwischen dem verstellbaren Hauptbremszylinder-Kolben und dem Bremsbetätigungselement unterbunden/verhindert/nicht gewährleistet ist, kann die Funktion/das bevorzugte Generator-Bremsmoment somit mit steigender Größe stetig zunehmen. Insbesondere kann das bevorzugte Generator-Bremsmoment bei einer Betätigungsstärke unter der Mindestbetätigungsstärke der Betätigungsstärke der Betätigung des Bremsbetätigungselements/dem Fahrerbremswunsch entsprechen. Demgegenüber weist die Funktion/das bevorzugte Generator-Bremsmoment bei einer Betätigungsstärke über der Mindestbetätigungsstärke keinen zur Größe proportionalen Verlauf auf. Bevorzugter Weise nimmt die Funktion/das bevorzugte Generator-Bremsmoment bei einer Betätigungsstärke über der Mindestbetätigungsstärke stetig ab. Insbesondere kann die Funktion/das bevorzugte Generator-Bremsmoment ab einer Betätigungsstärke über der Mindestbetätigungsstärke gegen Null gehen.

Die Steuervorrichtung ist somit dazu ausgelegt, für ein Rekuperieren mit einem gegenüber dem Gesamt-Bremsmoment vergleichsweise hohen Soll-Generator-Bremsmoment die unterbundene/verhinderte/nicht gewährleistete Kraftübertragung zwischen dem verstellbaren Hauptbremszylinder-Kolben und dem Bremsbetätigungselement zu nutzen. Dies gewährleistet einen vorteilhaften Bedienkomfort für den Fahrer trotz der Rekuperation und des gleichzeitig ausführbaren Verblendens, wie unten noch genauer ausgeführt wird.

Die Generatorsteuereinrichtung 5 kann zusätzlich dazu ausgelegt ist, das Größte der ausführbaren Kann-Generator-Bremsmomente, welche noch kleiner oder gleich der Funktion der aus dem Sensorsignal hergeleiteten Größe sind, als Soll-Generator-Bremsmoment festzulegen. Weitere mittels der Generatorsteuereinrichtung 5 ausführbare Funktionen sind weiter unten beschrieben.

Die Steuervorrichtung weist auch eine Ventilsteuereinrichtung 7 auf, mittels welcher, ein Ventilsteuersignal 8 an mindestens ein (nicht skizziertes) Speicherkammer-Freischalt-Ventil eines Bremskreises des Bremssystems ausgebbar ist. Sofern das festgelegte Soll-Generator-Bremsmoment gleich Null ist, ist das mindestens eine Speicherkammer-Freischalt-Ventil mittels des Ventilsteuersignals 8 in eine erste Ventilstellung steuerbar, wodurch eine Bremsflüssigkeitsverschiebung aus einem Hauptbremszylinder des Bremssystems in mindestens eine Radbremszange des Bremskreises bewirkbar/gewährleistet ist, während eine Bremsflüssigkeitsverschiebung aus dem Hauptbremszylinder in eine Speicherkammer des Bremskreises unterbunden ist.

Sofern das festgelegte Soll-Generator-Bremsmoment ungleich Null ist, ist mittels der Ventilsteuereinrichtung 7 ein Ventilsteuersignal 8 ausgebbar, welches das mindestens eine Speicherkammer-Freischalt-Ventil so in eine zweite Ventilstellung steuert, dass eine Bremsflüssigkeitsverschiebung aus dem Hauptbremszylinder in die Speicherkammer bewirkbar/gewährleistet ist. Beispiele für das mindestens eine Speicherkammer-Freischalt-Ventil und ihre Anbringpositionen in einem Bremssystem werden unten noch beschrieben.

Die Ventilsteuereinrichtung 7 kann zusammen mit der Generatorsteuereinrichtung 5 in eine Auswerteelektronik 9 integriert sein. In diesem Fall entfällt die Notwendigkeit, die Steuereinrichtungen 5 und 7 getrennt mit auszuwertenden Informationen 9' zu versorgen. Die Steuervorrichtung ist jedoch nicht auf die Integration der Steuereinrichtungen 5 und 7 in eine Auswerteelektronik 9 limitiert.

Optionalerweise umfasst die Steuervorrichtung zusätzlich eine (nicht dargestellte) Pumpensteuereinrichtung, mittels welcher ein Soll-Pumpmodus einer Pumpe des Bremskreises unter Berücksichtigung einer zeitlichen Abnahme des Soll-Generator-Bremsmoments festlegbar ist. Die Pumpe, mittels welcher Bremsflüssigkeit aus der Speicherkammer des Bremskreises zu der mindestens einen Radbremszange des Bremskreises pumpbar ist, ist durch die Pumpensteuereinrichtung entsprechend dem Soll-Pumpmodus ansteuerbar.

Die Steuervorrichtung kann insbesondere dazu ausgelegt sein, die Verfahrensschritte der unten beschriebenen Verfahren auszuführen. Es wird hier deshalb nicht genauer auf die Funktionsweise der Steuervorrichtung eingegangen.

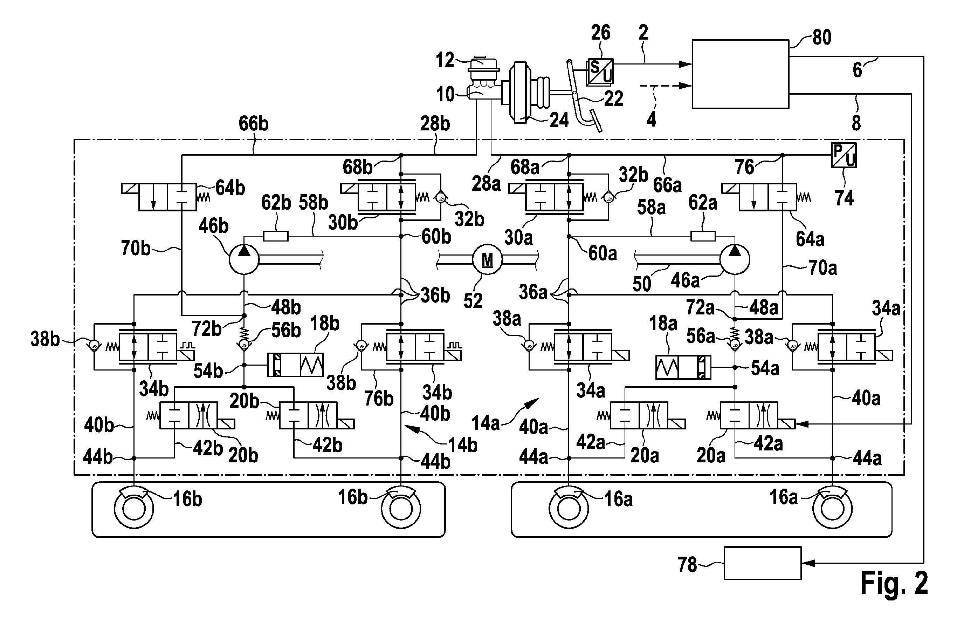

Fig. 2 zeigt eine schematische Darstellung eines Bremssystems mit der Steuervorrichtung.

Das in Fig. 2 schematisch wiedergegebene Bremssystem ist beispielsweise in einem Hybrid- und in einem Elektrofahrzeug vorteilhaft einsetzbar. Die Einsetzbarkeit des im Weiteren beschriebenen Bremssystems ist jedoch nicht auf die Verwendung in einem Hybrid- oder in einem Elektrofahrzeug beschränkt.

Das Bremssystem weist einen Hauptbremszylinder 10 auf, welcher beispielsweise als Tandemhauptbremszylinder ausführbar ist. Das Bremssystem ist jedoch nicht auf die Verwendung eines Tandemhauptbremszylinders beschränkt. Der Hauptbremszylinder 10 kann über mindestens eine Bremsflüssigkeit-Austauschöffnung, wie beispielsweise eine Schnüffelbohrung, mit einem Bremsmediumreservoir 12 verbunden sein.

Mit dem Hauptbremszylinder 10 ist mindestens ein Bremskreis 14a und 14b hydraulisch verbunden. Der mindestens eine Bremskreis 14a und 14b umfasst mindestens eine Radbremszange 16a und 16b, eine Speicherkammer 18a und 18b und mindestens ein der Speicherkammer 18a oder 18b zugeordnetes Speicherkammer-Freischalt-Ventil 20a und 20b. Man kann die Funktionsweise des mindestens einen Speicherkammer-Freischalt-Ventils 20a und 20b so umschreiben, dass bei einem Vorliegen des mindestens einen Speicherkammer-Freischalt-Ventils 20a und 20b in einer ersten Ventilstellung eine Bremsflüssigkeitsverschiebung aus dem Hauptbremszylinder in die mindestens eine Radbremszange 16a und 16b bewirkbar/gewährleistet ist, während eine Bremsflüssigkeitsverschiebung aus den Hauptbremszylinder 10 in die mindestens eine Speicherkammer 18a und 18b unterbunden ist, und bei einem Vorliegen des mindestens einen Speicherkammer-Freischalt-Ventils 20a und 20b in einer zweiten Ventilstellung eine Bremsflüssigkeitsverschiebung aus dem Hauptbremszylinder 10 in die Speicherkammer 18a oder 18b bewirkbar/gewährleistet ist.

Bei einem ersten Ausführungsbeispiel für das mindestens eine Speicherkammer-Freischalt-Ventil 20a und 20b kann auch in der zweiten Ventilstellung noch ein Teil des aus dem Hauptbremszylinder 10 herausgedrückten Bremsflüssigkeitsvolumens in die mindestens eine Radbremszange 16a und 16b transferierbar sein. Ebenso kann das aus dem Hauptbremszylinder 10 herausgedrückte Bremsflüssigkeitsvolumen bei einem Vorliegen des mindestens einen Speicherkammer-Freischalt-Ventils 20a und 20b in der zweiten Ventilstellung über die mindestens eine Radbremszange 16a und 16b in die Speicherkammer 18a oder 18b transferierbar sein. Beispielsweise kann das mindestens eine Speicherkammer-Freischalt-Ventil 20a und 20b dazu ausgelegt sein, eine hydraulische Verbindung zwischen der mindestens einen Radbremszange 16a und 16b und der zugeordneten Speicherkammer 18a und 18b wahlweise zu unterbinden und zu öffnen.

In einer vorteilhaften Ausführungsform ist das mindestens eine Speicherkammer-Freischalt-Ventil 20a und 20b in einer hydraulischen Verbindung zwischen der mindestens einen Radbremszange 16a und 16b und der zugeordneten Speicherkammer 18a oder 18b angeordnet. Das mindestens eine Speicherkammer-Freischalt-Ventil 20a und 20b kann insbesondere ein Radauslassventil sein. Durch diese Multifunktionalität des mindestens einen Speicherkammer-Freischalt-Ventils 20a und 20b zum Festlegen eines Einfüllorts eines aus dem Hauptbremszylinder 10 herausgedrückten Bremsflüssigkeitsvolumens und zusätzlich zum Erfüllen der Funktion eines Radauslassventils können zusätzliche Komponenten am Bremssystem eingespart werden. Dadurch sind eine kostengünstige Ausführung und ein geringer Bauraumbedarf des Bremssystems gewährleistet.

Bei einem zweiten Ausführungsbeispiel für das mindestens eine Speicherkammer-Freischalt-Ventil 20a und 20b kann bei einem Vorliegen des mindestens einen Speicherkammer-Freischalt-Ventils 20a und 20b in der zweiten Ventilstellung eine Bremsflüssigkeitsverschiebung zwischen dem Hauptbremszylinder und der mindestens einen Speicherkammer 16a und 16b unterbunden sein. Somit ist das Bremssystem nicht auf die Verwendung eines Radauslassventils als das mindestens eine Speicherkammer-Freischalt-Ventil 20a und 20b beschränkt. Beispielsweise kann als das mindestens eine Speicherkammer-Freischalt-Ventil 20a und 20b auch mindestens ein Ventil verwendet werden, welches/welche so in dem Bremskreis 14a oder 14b angeordnet ist/sind, dass bei einem Vorliegen des mindestens einen Ventils in einer ersten (Gesamt-)Ventilstellung eine erste hydraulische Verbindung zwischen dem Hauptbremszylinder 10 und der mindestens einen Radbremszange 16a und 16b freigeschaltet und eine zweite hydraulische Verbindung zwischen dem Hauptbremszylinder 10 und der Speicherkammer 18a und 18b geschlossen sind, während bei einem Vorliegen des mindestens einen Ventils in einer zweiten (Gesamt-)Ventilstellung die zweite hydraulische Verbindung offen ist, und gleichzeitig eine Bremsflüssigkeitsverschiebung aus dem Hauptbremszylinder 10 in die mindestens eine Radbremszange 16a und 16b unterbunden ist.

Die dem Bremskreis 14a oder 14b zugeordneten Räder können beispielsweise diagonal an einem Fahrzeug angeordnet sein. In diesem Fall ist das Bremssystem für eine X-Bremskreisaufteilung ausgelegt, auf welche es jedoch nicht beschränkt ist. Beispielsweise kann das Bremssystem auch für eine II-Bremskreisaufteilung verwendet werden, bei welcher die einem Bremskreis 14a und 14b zugeordneten Räder an einer gemeinsamen Achse angeordnet sind.

Das Bremssystem weist vorzugsweise auch ein Bremsbetätigungselement 22 auf, welches derart an dem Hauptbremszylinder 10 angeordnet ist, dass bei einem Betätigen des Bremsbetätigungselements 22 mit zumindest einer Mindestbetätigungsstärke eine auf das Bremsbetätigungselement 22 aufgebrachte Fahrerbremskraft auf einen (nicht skizzierten) verstellbaren Hauptbremszylinder-Kolben des Hauptbremszylinders 10 so übertragbar ist, dass der Hauptbremszylinder-Kolben mittels der Fahrerbremskraft verstellbar ist. Bevorzugter Weise wird mittels dieses Verstellens des Hauptbremszylinder-Kolbens ein Innendruck in mindestens einer Kammer des Hauptbremszylinders 10 gesteigert. Bei dem hier beschriebenen Bremssystem ist das Bremsbetätigungselement 22 zusätzlich derart an dem Hauptbremszylinder 10 angeordnet, dass während des Betätigens des Bremsbetätigungselements mit einer Betätigungsstärke ungleich Null aber unter der Mindestbetätigungsstärke eine Kraftübertragung zwischen dem Bremsbetätigungselement 22 und dem Hauptbremszylinder-Kolben unterbunden ist. Dies gewährleistet den Vorteil, dass der Fahrer während des Betätigens des Bremsbetätigungselements 22 mit der Betätigungsstärke unter der Mindestbetätigungsstärke von dem Hauptbremszylinder 10 und dem mindestens einen daran angebundenen Bremskreis 14a und 14b "entkoppelt" ist, und somit keine Rückwirkung des darin vorliegenden Drucks spürt. Auf die vorteilhafte Einsetzbarkeit dieses Vorteils zum Verblenden eines Generator-Bremsmoments wird unten noch genauer eingegangen.

Das dargestellte Bremssystem weist in einer bevorzugten Ausführungsform noch einen Bremskraftverstärker 24, wie beispielsweise einen Vakuumbremskraftverstärker, auf. Anstelle eines Vakuumbremskraftverstärkers kann das Bremssystem auch einen anderen Typ des Bremskraftverstärkers 24, wie beispielsweise eine hydraulische und/oder eine elektromechanische Verstärkungseinrichtung, aufweisen. Der Bremskraftverstärker 24 kann insbesondere ein stetig regelbarer/stetig steuerbarer Bremskraftverstärker sein.

Mittels des Bremskraftverstärkers 24 ist in der Regel zumindest während des Betätigens des Bremsbetätigungselements unter der Mindestbetätigungsstärke der Hauptbremszylinder-Kolben so verstellbar, dass ein Bremsflüssigkeitsvolumen aus dem Hauptbremszylinder 10 verschiebbar ist. Aufgrund der vorteilhaften Funktionsweise des mindestens einen Speicherkammer-Freischalt-Ventils 20a und 20b ist das aus dem Hauptbremszylinder verschobene Bremsflüssigkeitsvolumen wahlweise in die Speicherkammer 18a und 18b oder in die mindestens eine Radbremszange 16a und 16b verschiebbar. Zusätzlich zu dem Bremsflüssigkeitsvolumen kann noch ein (vernachlässigbar kleines) Zusatzflüssigkeitsvolumen aufgrund des Verstellens des Hauptbremszylinder-Kolbens aus dem Hauptbremszylinder 10 verschiebbar sein, wobei dieses Zusatzbremsflüssigkeitsvolumen unabhängig von der Ventilstellung des mindestens einen Speicherkammer-Freischalt-Ventils 20a und 20b in die mindestens eine Radbremszange 16a und 16b transferierbar sein kann.

Ein Bremskraftverstärker 24 weist in der Regel zu Beginn seines Betätigungswegs eine unendliche Verstärkung auf. In diesem Bereich besteht noch keine mechanische Kopplung zwischen dem Bremsbetätigungselement 22, wie beispielsweise einem Bremspedal, und dem Hauptbremszylinder-Kolben. Man kann dies auch als Fehlen einer mechanischen Kopplung zwischen Bremsbetätigungselement 22 und dem Bremssystem bezeichnen. Die Fahrerbremskraft wird in diesem Bereich nicht zur Betätigung des Hauptbremszylinders 10, das heißt zum Verstellen des Hauptbremszylinder-Kolbens, herangezogen, sondern lediglich zur Steuerung des Bremskraftverstärkers 24 genutzt.

Der Beginn des Betätigungswegs, in welchem die Betätigungsstärke ungleich Null noch unter der Mindestbetätigung liegt, wird deshalb häufig auch Jump-In-Bereich genannt.

Außerhalb des Jump-In-Bereichs existiert eine mechanische Kopplung zwischen dem Bremsbetätigungselement 22 und dem Hauptbremszylinder-Kolben. Die Fahrerbremskraft wird somit außerhalb des Jump-In-Bereichs zum Verstellen des Hauptbremszylinder-Kolbens und somit zum Einbremsen in die mindestens eine Radbremszange 16a und 16b genutzt. Dieser Vorgang kann durch die zusätzliche Kraft des Bremskraftverstärkers 24 unterstützt werden.

Die Eigenschaft des Bremskraftverstärkers 24 kann somit für ein Einbremsen in den Hauptbremszylinder ohne eine mechanische Kopplung/Kraftübertragung zwischen dem Bremsbetätigungselement 22 und dem Hauptbremszylinder-Kolben genutzt werden. Somit ist der Beginn des Betätigungswegs mit einer Betätigungsstärke ungleich Null aber unter der Mindestbetätigung, bzw. der Jump-In-Bereich, vorteilhaft für ein Verblenden eines Generator-Bremsmoments verwendbar, wie unten noch ausgeführt wird.

Bevorzugter Weise umfasst das Bremssystem auch einen Bremsbetätigungselement-Sensor 26, mittels welchem die Betätigungsstärke der Betätigung des Bremsbetätigungselements 22 durch den Fahrer ermittelbar ist. Der Bremsbetätigungselement-Sensor 26 kann beispielsweise einen Pedalwegsensor, einen Differenzwegsensor und/oder einen Stangenwegsensor erfassen. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Außerdem kann das Bremssystem über einen zusätzlichen Leerweg verfügen, der entweder am Bremsbetätigungselement 22, wie beispielsweise einem Bremspedal, an dem Bremskraftverstärker 24 und/oder an dem Hauptbremszylinder 10 ausgebildet sein kann. Da die erfindungsgemäße Technologie einen derartigen Leerweg am Bremssystem nicht benötigt, wird hier nicht weiter auf diesen eingegangen.

Bei der dargestellten Ausführungsform weist das Bremssystem zwei Bremskreise 14a und 14b auf, welche gleich ausgebildet sind. Die Ausbildbarkeit des Bremssystems ist jedoch weder auf diese Anzahl der Bremskreise 14a und 14b, noch auf die gleiche Ausbildung seiner Bremskreise 14a und 14b beschränkt. Insbesondere sind die nachfolgenden Ausführungen zu den Bremskreisen 14a und 14b lediglich beispielhaft zu verstehen:
Jeder der Bremskreise 14a und 14b weist zwei Radbremszangen 16a und 16b auf, die zusammen einer Speicherkammer 18a und 18b zugeordnet ist. Die Bremskreise 14a und 14b sind über eine Zufuhrleitung 28a und 28b, welche zu einem Bremskreis-eigenen Umschaltventil 30a oder 30b mit einem parallel dazu angeordneten Rückschlagventil 32a oder 32b führt, mit dem Hauptbremszylinder 10 verbunden. Je ein einer Radbremszange 16a oder 16b zugeordnetes Radeinlassventil 34a und 34b ist über eine sich verzweigende Leitung 36a oder 36b mit dem Umschaltventil 30a oder 30b verbunden. Parallel zu jedem der Radeinlassventile 34a und 34b ist je ein Rückschlagventil 38a oder 38b angeordnet. Die Radeinlassventile 34a und 34b sind über eine Leitung 40a oder 40b mit der zugeordneten Radbremszange 16a und 16b verbunden. Über eine Leitung 42a oder 42b und einem in den Leitungen 40a und 40b ausgebildeten Verzweigungspunkt 44a oder 44b sind auch als Speicherkammer-Freischalt-Ventile 20a und 20b eingesetzten Radauslassventile mit der zugeordneten Bremszange 16a oder 16b verbunden.

Jeder der Bremskreise 14a und 14b weist eine Pumpe 46a oder 46b auf, welche über eine sich verzweigende Leitung 48a oder 48b mit den beiden Radauslassventilen des jeweiligen Bremskreises 14a und 14b verbunden ist. Die Pumpen 46a und 46b können beispielsweise als Einkolbenpumpen ausgeführt sein. Anstelle eines derartigen Pumpentyps können jedoch auch anders ausgeführte Modulationssysteme, die beispielsweise mindestens eine Pumpe mit mehreren Kolben, mindesten eine asymmetrische Pumpe und/oder mindestens eine Zahnradpumpe eingesetzt werden. Insbesondere können die Pumpen 46a und 46b an einer gemeinsamen Welle 50 eines Pumpenmotors 52 angeordnet sein.

Die oben schon beschriebene Speicherkammer 18a und 18b kann über jeweils einen Verzweigungspunkt 54a und 54b mit der Leitung 48a und 48b verbunden sein. Ergänzend kann ein Überdruckventil 56a und 56b in jeder der Leitungen 48a und 48b angeordnet sein. Während die Ansaugseite einer Pumpe 46a und 46b mit den als Speicherkammer-Freischalt-Ventilen 20a und 20b verwendeten Radauslassventilen verbunden ist, kann die Förderseite mittels einer weiteren Leitung 58a und 58b und einem in der Leitung 36a und 36b ausgebildeten Verzweigungspunkt 60a oder 60b mit dem Umschaltventil 30a oder 30b des zugeordneten Bremskreises 14a oder 14b verbunden sein.

Optimaler Weise kann ein Pumpendämpfungselement 62a und 62b zusätzlich noch in die Leitung 58a und 58b eingesetzt sein. Bei der dargestellten Ausführungsform weist auch jeder der Bremskreise 14a und 14b ein Hochdruckschaltventil 64a und 64b auf, welches über eine Leitung 66a oder 66b und einen in der Zufuhrleitung 58a und 58b ausgebildeten Verzweigungspunkt 68a oder 68b mit dem Hauptbremszylinder 10 verbunden ist. Außerdem ist das Hochdruckschaltventil 64a und 64b über eine Leitung 70a und 70b mit einem in der Leitung 48a und 48b ausgebildeten Verzweigungspunkt 72a und 72b mit den daran angebundenen Komponenten hydraulisch verbunden. Des Weiteren kann mindestens ein Bremskreis 14a oder 14b einen Drucksensor 74 aufweisen, welcher beispielsweise über einen Verzweigungspunkt 76 mit der Leitung 66a verbunden ist.

Das Bremssystem weist auch einen Generator 78 und die oben schon beschriebene Steuervorrichtung 80 auf, welche die Signale 2 und 4 von dem Bremsbetätigungselement-Sensor 26, dem Generator 78, einer (nicht skizzierten) Batterie und/oder einem Bussystem empfängt und die Steuersignale 6 und 8 an den Generator 78 und das mindestens eine Speicherkammer-Freischalt-Ventil 20a und 20b ausgibt. Bezüglich der Funktionsweise der Steuervorrichtung 80 wird auf die oberen Ausführungen verwiesen.

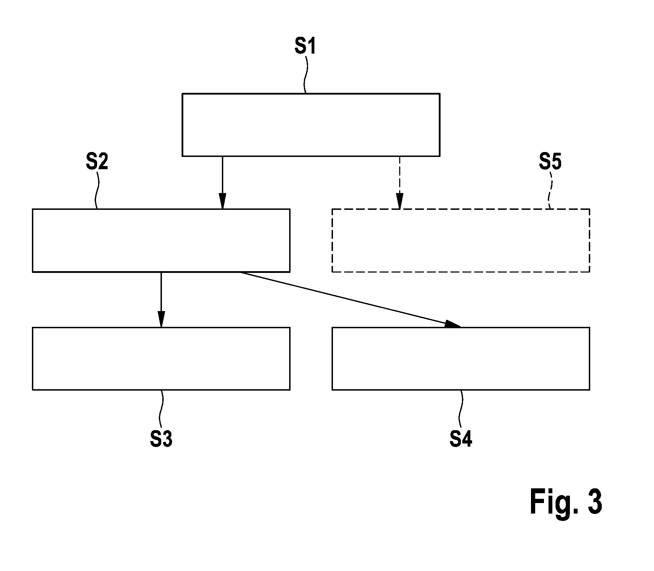

Fig. 3 zeigt ein Flussdiagramm zum Darstellen einer ersten Ausführungsform des Verfahrens.

Das nachfolgend beschriebene Verfahren kann insbesondere zumindest teilweise mittels der oben schon beschriebenen Steuervorrichtung ausführbar sein. Die Ausführbarkeit des Verfahrens ist jedoch nicht auf die Verwendung der Steuervorrichtung, bzw. des oben beschriebenen Bremssystems, beschränkt.

In einem Verfahrensschritt S1 wird ein Soll-Generator-Bremsmoment unter Berücksichtigung einer Betätigungsstärkegröße bezüglich einer Betätigungsstärke einer Betätigung eines Bremsbetätigungselements des Bremssystems und einer Information bezüglich mindestens eines ausführbaren Kann-Generator-Bremsmoments eines Generators des Bremssystems festgelegt. Der Verfahrensschritt S1 ist während des Ausführens des Verfahrens beliebig oft, beispielsweise in einer vorgegebenen Frequenz oder nach einer Veränderung der Betätigungsstärke, wiederholbar. Somit kann eine gesteigerte Betätigungsstärkegröße bezüglich einer gesteigerten Betätigungsstärke der Betätigung des Bremsbetätigungselements erkannt werden. Die gesteigerte Betätigungsstärkegröße wird mit einem Schwellwert bezüglich einer (oben schon beschriebenen) Mindestbetätigungsstärke, ab welcher eine auf das Bremsbetätigungselement aufgebrachte Fahrerbremskraft auf einen verstellbaren Hauptbremszylinder-Kolben des Hauptbremszylinders übertragen wird, verglichen.

Sofern die gesteigerte Betätigungsstärkegröße den Schwellwert überschreitet, wird das Soll-Generator-Bremsmoment trotz der gesteigerten Betätigungsstärkegröße konstant gehalten oder reduziert. Vorzugsweise wird in dem Verfahrensschritt S1, sofern die gesteigerte Betätigungsstärkegröße (noch) unter dem Schwellwert liegt, ein gesteigertes Generator-Bremsmoment unter Berücksichtigung der gesteigerten Betätigungsstärkegröße ermittelt. Anschließend wird das Größte der ausführbaren Kann-Generator-Bremsmomente, welche noch kleiner oder gleich dem gesteigerten Generator-Bremsmoment sind, als Soll-Generator-Bremsmoment festgelegt. (Sofern kein ausführbares Kann-Generator-Bremsmoment ermittelbar ist, welches kleiner oder gleich dem gesteigerten Generator-Bremsmoment ist, wird das Soll-Generator-Bremsmoment gleich Null festgelegt.)

In einem Verfahrensschritt S2 wird der Generator unter Berücksichtigung des festgelegten Soll-Generator-Bremsmoments angesteuert. Bevorzugter Weise hält der in dem Verfahrensschritt S2 angesteuerte Generator das Soll-Generator-Bremsmoment (verlässlich) ein.

In den weiteren Verfahrensschritten S3 und S4 wird das festgelegte Soll-Generator-Bremsmoment verblendet. Dazu wird, sofern das festgelegte Soll-Generator-Bremsmoment gleich Null ist, in einem Verfahrensschritt S3 mindestens ein Speicherkammer-Freischalt-Ventil eines Bremskreises des Bremssystems in eine erste Ventilstellung gesteuert, wodurch eine Bremsflüssigkeitsverschiebung aus einem Hauptbremszylinder des Bremssystems in mindestens eine Radbremszange des Bremskreises bewirkt/gewährleistet wird. Eine Bremsflüssigkeitsverschiebung aus dem Hauptbremszylinder in eine Speicherkammer des Bremskreises wird jedoch durch das in die erste Ventilstellung gesteuerte mindestens eine Speicherkammer-Freischalt-Ventil unterbunden.

Der Fahrer bremst somit mittels des Bremsbetätigungselements, wie beispielsweise mittels eines Bremspedals, über den Hauptbremszylinder in die mindestens eine Radbremszange ein. Zur Verstärkung der Bremswirkung des Fahrers kann zusätzlich ein Bremskraftverstärker eingesetzt werden. Das Verhalten des mittels des Verfahrens gesteuerten Bremssystems entspricht somit während des Verfahrensschritts S3 einem (konventionellen) Bremssystem ohne eine ausgeführte Verblendungs-Funktion.

Sofern das festgelegte Soll-Generator-Bremsmoment ungleich Null ist, wird in einem Verfahrensschritt S4 das mindestens eine Speicherkammer-Freischalt-Ventil in eine zweite Ventilstellung gesteuert, wodurch eine Bremsflüssigkeitsverschiebung aus dem Hauptbremszylinder in die Speicherkammer bewirkt/gewährleistet wird und das hydraulische Bremsmoment der mindestens einen Radbremszange des Bremskreises trotz des Verschiebens der Bremsflüssigkeit aus dem Hauptbremszylinder in den Bremskreis konstant gehalten oder reduziert wird. Trotz der Betätigung des Bremsbetätigungselements durch den Fahrer und des damit verbundenen Druckaufbaus in dem Hauptbremszylinder wird deshalb kein (unerwünschtes) hydraulisches Bremsmoment aufgebaut. Beispiele für das mindestens eine Speicherkammer-Freischalt-Ventil sind oben schon genannt.

Mittels des Verfahrens ist gewährleistbar, dass ein hydraulisches Bremsmoment mindestens einer Radbremszange so an ein ausführbares und aktuell ausgeführtes Generator-Bremsmoment eines Generators angepasst wird, dass ein von dem Fahrer vorgegebenes Gesamt-Bremsmoment verlässlich eingehalten wird. Vorzugsweise wird dabei sichergestellt, dass das Größte ausführbare Generator-Bremsmoment zum Abbremsen des Fahrzeugs ausgeführt wird, um eine mittels des Generators aufladbare Batterie innerhalb einer vergleichsweise kurzen Zeit aufzuladen.

Optionalerweise wird in einem Verfahrensschritt S5 ein Soll-Pumpmodus einer Pumpe des Bremskreises unter Berücksichtigung einer (erkannten oder festgelegten) zeitlichen Abnahme des Soll-Generator-Bremsmoments festgelegt und die Pumpe so gesteuert, dass Bremsflüssigkeit aus der Speicherkammer des Bremskreises zu der mindestens einen Radbremszange des Bremskreises gepumpt wird. Somit kann das hydraulische Bremsmoment der mindestens einen Radbremszange auch an die zeitliche Abnahme des Soll-Generator-Bremsmoments angepasst werden.

Ein regeneratives Bremsen ist in der Regel nur ausführbar, wenn die mittels des Generators aufladbare Batterie einen Aufladungswert unterhalb eines Schwellwerts hat und/oder das Fahrzeug mit einer Geschwindigkeit über einer vorgegebenen Mindestgeschwindigkeit fährt. Somit wirkt während des generativen Bremsens ein festgelegtes/bekanntes/leicht messbares Generator-Bremsmoment, welches häufig jedoch aufgrund der hier genannten Faktoren nicht zeitlich konstant einhaltbar ist, auf das Fahrzeug ein. Trotz des zeitlichen Variierens/Wegfallens des Generator-Bremsmoments ist es wünschenswert, dass das von dem Fahrer vorgegebene Gesamt-Bremsmoment verlässlich eingehalten wird. Dies ist mittels des hier beschriebenen Verfahrens vorteilhaft realisierbar.

Da bei dem Verfahren ein rekuperatives Bremsen mit einem hohen Soll-Generator-Bremsmoment hauptsächlich bei einer Betätigungsstärke unter der Mindestbetätigungsstärke ausgeführt wird, wird aufgrund der unterbundenen Kraftübertragung zwischen dem Bremsbetätigungselement und dem Hauptbremszylinder keine Kraftrückkwirkung/Gegenkraft auf das Bremsbetätigungselement transferiert. Somit spürt der Fahrer trotz eines rein hydraulischen Bremsens keine Gegenkraft am Bremsbetätigungselement, wie bei Vorliegen einer mechanischen Kopplung zwischen dem Bremsbetätigungselement und dem Hauptbremszylinder. Ebenso bemerkt der Fahrer bei einem rein generativen Bremsen kein Fehlen der Gegenkraft, da er gewohnt ist, bei einer Betätigungsstärke unter der Mindestbetätigungsstärke keine von der mindestens einen Radbremszange bedingte Gegenkraft zu spüren.

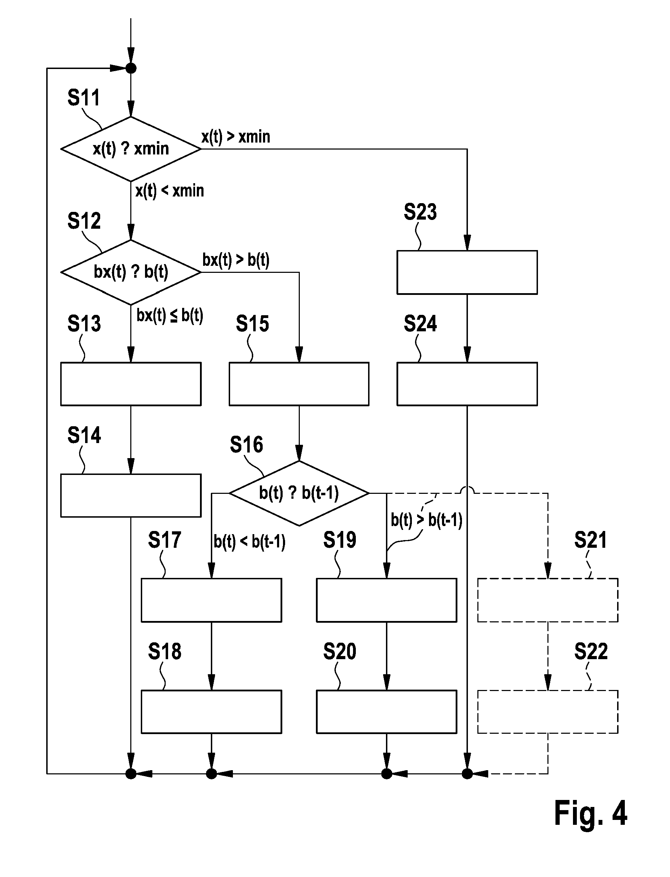

Fig. 4 zeigt ein Flussdiagramm zum Darstellen einer zweiten Ausführungsform des Verfahrens.

Die Ausführbarkeit des nachfolgend beschriebenen Verfahrens ist nicht auf die Verwendung der oben beschriebenen Steuervorrichtung, bzw. des damit ausgestatteten Bremssystems, beschränkt, obwohl das Verfahren zumindest teilweise damit ausführbar ist.

In einem Verfahrensschritt S11 wird ein empfangenes Sensorsignal bezüglich einer Betätigungsstärke x(t) einer Betätigung des Bremsbetätigungselements durch den Fahrer mit einem Schwellwert bezüglich einer Mindestbetätigungsstärke xmin verglichen, wobei bei einem Betätigen des Bremsbetätigungselements mit einer Betätigungsstärke x(t) unter der Mindestbetätigungsstärke xmin eine Kraftübertragung zwischen dem Bremsbetätigungselement und einem verstellbaren Hauptbremszylinder-Kolben eines Hauptbremszylinders unterbunden ist. Demgegenüber ist bei einem Betätigen des Bremsbetätigungselements mit zumindest der Mindestbetätigungsstärke xmin eine auf das Bremsbetätigungselement aufgebrachte Fahrerbremskraft so auf den verstellbaren Hauptbremszylinder-Kolben übertragen, dass dieser mittels der Fahrerbremskraft verstellbar und somit ein Innendruck in mindestens einer Kammer des Hauptbremszylinders steigerbar ist. Die Mindestbetätigungsstärke kann beispielsweise einem Gesamt-Bremsmoment von 0,2 g entsprechen.

Sofern die dem Sensorsignal entsprechende Betätigungsstärke x(t) unterhalb der dem Schwellwert entsprechenden Mindestbetätigungsstärke xmin liegt, bzw. sofern das Sensorsignal unter dem Schwellwert liegt, wird in einem Verfahrensschritt S12 das Sensorsignal mit einem Informationssignal bezüglich mindestens eines ausführbaren Kann-Generator-Bremsmoments b(t) verglichen. Beispielsweise wird dabei untersucht, ob ein der Betätigungsstärke entsprechendes Generator-Bremsmoment bx(t) aktuell mittels des Generators ausübbar ist. Trifft dies zu, so wird nachfolgend der Verfahrensschritt S13 (Verfahrensschritt S4) ausgeführt.

In dem Verfahrensschritt S13 wird das mindestens eine Speicherkammer-Freischalt-Ventil in die zweite Ventilstellung gesteuert, in welcher eine Bremsflüssigkeitsverschiebung aus dem Hauptbremszylinder in die Speicherkammer gewährleistet ist. Beispielsweise kann das mindestens eine als Speicherkammer-Freischalt-Ventil verwendete Radauslassventil geöffnet werden. Somit wird sichergestellt, dass trotz der Betätigung des Bremsbetätigungselements und des damit verbundenen Verstellens des Hauptbremszylinder-Kolbens kein hydraulisches Bremsmoment mittels der mindestens einen Radbremszange auf ein Rad des Fahrzeugs ausgeübt wird. Dadurch ist das von dem Fahrer angeforderte Gesamt-Bremsmoment vollständig zum Aufladen der Batterie über ein regeneratives Bremsen nutzbar. Da bei einer Betätigungsstärke x(t) unter der Mindestbetätigung xmin keine Kraftübertragung zwischen dem Bremsbetätigungselement und dem Hauptbremszylinder-Kolben vorliegt, spürt der Fahrer nicht, dass das aus dem Hauptbremszylinder verschobenen Bremsflüssigkeitsvolumen in die Speicherkammer, und nicht in die mindestens eine Radbremszange verschoben wird.

Man kann dies auch so umschreiben, dass innerhalb eines durch die Mindestbetätigung xmin definierten Jump-In-Bereichs keine mechanische Kopplung zwischen dem Bremsbetätigungselement und dem Hauptbremszylinder-Kolben existiert und der Fahrer somit aufgrund des grundsätzlichen Fehlens der Pedalgegenkraft im Jump-In-Bereich nicht feststellen kann, in welche Komponente das Bremsflüssigkeitsvolumen verschoben wird. Der Fahrer spürt somit nicht an der Pedalgegenkraft, ob hydraulisch oder generativ gebremst wird.

In dem anschließend ausgeführten Verfahrensschritt S14 (Verfahrensschritt S2) wird der Generator so angesteuert, dass das Ist-Bremsmoment des Generators dem festgelegten Soll-Generator-Bremsmoment, insbesondere dem angeforderten Gesamt-Bremsmoment, entspricht. Dies gewährleistet ein schnelles Aufladen der Batterie.

Wird im Verfahrensschritt S12 festgestellt, dass nur rein hydraulisch verzögert werden kann (lediglich ein aktuell ausführbares Generator-Bremselement b(t) gleich Null), so wird (in einem nicht dargestellten Verfahrensschritt) das mindestens eine Speicherkammer-Freischalt-Ventil in die erste Ventilstellung gesteuert, in welcher eine Bremsflüssigkeitsverschiebung aus dem Hauptbremszylinder in die mindestens eine Radbremszange bewirkt/gewährleistet wird, während eine Bremsflüssigkeitsverschiebung aus dem Hauptbremszylinder in die Speicherkammer unterbunden ist. Beispielsweise kann dazu das mindestens eine als Speicherkammer-Freischalt-Ventil verwendete Radauslassventil geschlossen werden.

Liegt die Betätigungsstärke x(t) noch unter der Mindestbetätigungsstärke xmin, obwohl ein der Betätigungsstärke x(t) entsprechendes Bremsmoment bx(t) größer als das (maximal) ausführbare Generator-Bremsmoment b(t) ist, so kann sowohl regenerativ als auch hydraulisch gebremst werden. Dazu kann in dem Verfahrensschritt S15 (Verfahrensschritt S3) ein hydraulisches Soll-Bremsmoment gleich einer Differenz des Bremsmoments bx(t) (entsprechend der Betätigungsstärke x(t)) und des aktuell ausführbaren (maximalen) Generator-Bremselement b(t) aufgebaut werden.

Vorzugsweise wird dazu ab einem Gesamt-Bremsmoment (Fahrerbremswunsch) über dem (maximal) ausführbaren Generator-Bremsmoment b(t) das mindestens eine Speicherkammer-Freischalt-Ventil aus der zweiten Ventilstellung in die erste Ventilstellung gesteuert. Beispielsweise wird das mindestens eine als Speicherkammer-Freischalt-Ventil genutzte Auslassventil geschlossen. Auf diese Weise ist ein der Differenz zwischen dem der Betätigungsstärke x(t) entsprechenden Bremsmoment bx(t) und dem (maximal) ausführbaren Generator-Bremsmoment b(t) entsprechendes Volumen in die mindestens eine Radbremszange verschiebbar. Somit kann entsprechend der Erhöhung des Fahrerbremswunsches zusätzlich zu dem Generator-Bremsmoment noch ein hydraulisches Bremsmoment über einen Druckaufbau in der mindestens einen Radbremszange aufgebaut werden. Vorzugsweise entspricht die Summe aus dem Generator-Bremsmoment und dem hydraulischen Bremsmoment dem Fahrerbremswunsch/der Betätigungsstärke x(t).

Somit kann bei einer Betätigungsstärke x(t) unter der Mindestbetätigungsstärke xmin, bzw. bei einem Fahrerbremswunsch innerhalb des Jump-In-Bereichs, wahlweise rein hydraulisch, hydraulisch und regenerativ (Verfahrensschritt S15), oder rein regenerativ (Verfahrensschritt S13) gebremst werden. Lässt das aktuell ausübbare Generator-Bremsmoment (regenerative Bremsmoment) eine rein regenerative Bremsung zu, so wird über ein Steuern des mindestens einen Speicherkammer-Freischalt-Ventils in die zweite Ventilstellung sichergestellt, dass das vom Fahrer aus dem Hauptbremszylinder verschobene Volumen in die Speicherkammer verschoben wird, und damit kein hydraulisches Bremsmoment aufgebaut wird. Ab einem Fahrerbremswunsch über dem maximal ausführbaren Generator-Bremsmoment kann zumindest ein Teil der Fahrzeugverzögerung über die mindestens eine Radbremszange bewirkt werden.

Sofern eine Kraftübertragung zwischen dem Bremsbetätigungselement und dem Hauptbremszylinder-Kolben bei einer Betätigungsstärke x(t) unter der Mindestbetätigung xmin unterbunden ist, spürt der Fahrer nicht anhand der Gegenkraft am Bremsbetätigungselement, wohin das von ihm aus dem Hauptbremszylinder verschobene Volumen transferiert wird. Der Fahrer bemerkt somit keinen Unterschied zwischen einem Ausführen des Verfahrensschritts S15 und einem Ausführen des Verfahrensschritts S13. Trotzdem ist mittels einer an dem Bremsbetätigungselement angeordneten Bremsbetätigungselement-Sensorik der Fahrerbremswunsch ermittelbar und die Fahrzeugverzögerung verlässlich entsprechend einstellbar.

Wird bei der Ausführung des Verfahrens festgestellt, dass sich die Betätigungsstärke x(t), d.h. der aktuelle Fahrerbremswunsch, erhöht, so wird mittels der Verfahrensschritte S11 und S12 erneut überprüft, ob die aktuelle Betätigungsstärke x(t) noch unter der Mindestbetätigungsstärke xmin liegt, bzw. ob der Fahrerbremswunsch noch innerhalb des Jump-In-Bereichs liegt, und ob ein der Betätigungsstärke x(t) entsprechendes Bremsmoment bx(t) noch kleiner oder gleich dem (maximal) ausführbaren Generator-Bremsmoment b(t) ist.

Nach dem Verfahrensschritt S15 wird in einem Verfahrensschritt S16 untersucht, ob das (maximal) ausführbare Generator-Bremsmoment (zeitlich) abnimmt (b(t)<b(t-1)). Wird dies festgestellt, so wird/bleibt das mindestens eine Speicherkammer-Freischalt-Ventil in die erste Ventilstellung gesteuert. Beispielsweise wird/bleibt das mindestens eine Auslassventil geschlossen. Anschließend kann in einem Verfahrensschritt S17 mittels der mindestens einen Pumpe Volumen aus der mindestens einen Speicherkammer zu der mindestens einen zugeordneten Radbremszange gefördert werden. Auf diese Weise wird der Bremsdruck in der mindestens einen Radbremszange gesteigert, was zu einem Anstieg des hydraulischen Bremsmoments führt. Vorzugsweise entspricht das mittels der Pumpe geförderte Volumen der (zeitlichen) Abnahme des ausführbaren Generator-Bremsmoments. In einem zuvor, gleichzeitig oder danach ausgeführten Verfahrensschritt S18 wird das (maximal) ausführbare Generator-Bremsmoment als Soll-Generator-Bremsmoment festgelegt. (Der Generator wird entsprechend angesteuert.)

Sofern in dem Verfahrensschritt S17 das gesamte zuvor in die Speicherkammer verschobene Volumen wieder in den mindestens einen Bremskreis zurückgefördert wird, wird anschließend rein hydraulisch gebremst. Aufgrund der unterbundenen Kraftübertragung zwischen dem Bremsbetätigungselement und dem Hauptbremszylinder-Kolben ist dies für den Fahrer jedoch nicht wahrnehmbar.

Wird in dem Verfahrensschritt S16 festgestellt, dass das ausführbare Generator-Bremsmoment während der Bremsung zunimmt (b(t)>b(t-1)), so können in einem optionalen Verfahrensschritt S19 das Soll-Generator-Bremsmoment (und das ausgeführte Generator-Bremsmoment) trotzdem konstant gehalten werden. In einem Verfahrensschritt S20 kann über ein entsprechendes Ansteuern des mindestens einen Speicherkammer-Freischalt-Ventils sichergestellt werden, dass eine Reduzierung oder Erhöhung der Betätigungsstärke x(t) während der aktuell durchgeführten Bremsung lediglich zu einer Veränderung des hydraulischen Bremsmoments führt. Dies gilt solange, bis eine Betätigungsstärke x(t) über der Mindestbetätigungsstärke xmin (d.h. ein Verlassen des Jump-In-Bereichs) oder eine Betätigungsstärke x(t) entsprechend des aktuell ausgeführten Generator-Bremsmoments festgestellt wird. Diese Bremsstrategie hat den Vorteil des maximalen Komforts. Für den Fahrer ist weder eine Veränderung in der Pedalweg-Pedalkraft-Charakteristik noch eine Veränderung in der Pedalweg-Verzögerungs-Charakteristik feststellbar.

Alternativ zu den Verfahrensschritten S19 und S20 können auch die Verfahrensschritte S21 und S22 ausgeführt werden. In einem Verfahrensschritt S21 kann das mindestens eine Speicherkammer-Freischalt-Ventil so angesteuert werden, dass das hydraulische Bremsmoment sich einer Erhöhung oder einer Reduzierung der Betätigungsstärke x(t) der Betätigung des Bremsbetätigungselements durch den Fahrer anpasst. In dem nachfolgenden Verfahrensschritt S22 kann der Generator so angesteuert werden, dass das ausgeführte Generator-Bremsmoment entsprechend der Zunahme des ausführbaren Generator-Bremsmoments angehoben wird. Dies ist auch möglich, ohne dass der Fahrer eine Veränderung seines Bremswunsches vorgibt. Eventuell kann die zu große Verzögerung dazu führen, dass der Fahrer das Pedal löst, wodurch das hydraulische Bremsmoment automatisch reduziert wird. Dies führt zu einer wahrnehmbaren Änderung der Pedalweg-Verzögerung-Charakteristik, maximiert jedoch die bei der Bremsung über die Rekuperation gewonnene Energie.

Wird bei einem Ausführen des Verfahrensschritts S11 festgestellt, dass die Betätigungsstärke x(t) größer als die Mindestbetätigungsstärke xmin ist/wird, bzw. dass der Fahrerbremswunsch dem Jump-In-Bereich verlässt, so wird/bleibt das mindestens eine Speicherkammer-Freischalt-Ventil in die erste Ventilstellung gesteuert. In einem Verfahrensschritt S23 kann anschließend das in die mindestens eine Speicherkammer verschobene Volumen mittels der Pumpe in den mindestens einen Bremskreis zurückgefördert werden.

In einem weiteren Verfahrensschritt S24 kann das Soll-Generator-Bremsmoment auf Null reduziert und der Generator entsprechend angesteuert werden. Am Ende der Verfahrensschritte S23 und S24 kann das Bremssystem ein rein hydraulisches Bremsen ausführen. Diese Vorgehensweise führt nicht zu einer Änderung in der Pedalweg-Pedalkraft und in der Pedalweg-Verzögerungs-Charakteristik. Sie ist für den Fahrer nicht wahrnehmbar, und deshalb nicht mit einer Komforteinbuße verbunden.

Als Alternative zu dem Verfahrensschritt S24 ist es ebenfalls denkbar, nach einem Feststellen des Übersteigerns der Mindestbetätigungsstärke xmin durch die Betätigungsstärke x(t), bzw. nach einem Verlassen des Jump-In-Bereichs, das Soll-Generator-Bremsmoment nicht vollständig auf Null zu reduzieren. Beispielsweise kann das Soll-Generator-Bremsmoment stattdessen weiterhin entsprechend des Hauptbremszylinder-Drucks vorgegeben und der Generator entsprechend angesteuert werden. Auf diese Weise ist die rekuperative Effizienz des Bremssystems steigerbar, da auch außerhalb des Jump-In-Bereichs regenerativ gebremst wird und die Batterie somit schneller aufgeladen wird. Die sich daraus ergebende veränderte Pedalweg-Verzögerungs-Charakteristik ist zwar für den Fahrer wahrnehmbar, wird von diesem jedoch eher positiv wahrgenommen, da er somit bei einer starken Bremsung auch eine taktil wahrnehmbare Rückwirkung des Bremssystems spürt.

Durch ein Ausführen des Verfahrens ist es möglich, das hydraulische Bremsmoment mindestens einer Radbremszange des Bremssystems so einzustellen, dass trotz eines zeitlichen Variierens des ausführbaren Generator-Bremsmoments b(t) der von dem Fahrer vorgegebene Bremswunsch bei der Rekuperation verlässlich eingehalten wird. Reicht das (maximal) ausführbare Generator-Bremsmoment b(t) für ein vollständiges Umzusetzen des Fahrerbremswunsches aus, so kann rein generativ gebremst werden, wodurch die Batterie schnell aufladbar ist.

Ist der Fahrerbremswunsch größer als das (maximal) ausführbare Generator-Bremsmoment b(t), so kann zusätzlich zu dem Generator-Bremsmoment ein hydraulisches Bremsmoment aufgebaut werden. Dies erfolgt vorzugsweise so, dass der Fahrerbremswunsch vollständig erfüllt wird. Ebenso kann in einer Situation, in welcher kein Generator-Bremsmoment durch den Generator ausführbar ist, rein hydraulisch gebremst werden.

## Patentansprüche

1. Steuervorrichtung (80) für ein Bremssystem eines Fahrzeug mit:
einer ersten Empfangseinrichtung (1), mittels welcher ein Sensorsignal (2) bezüglich einer Betätigungsstärke (x(t)) einer Betätigung eines Bremsbetätigungselements (22) des Bremssystems empfangbar ist;
einer zweiten Empfangseinrichtung (3), mittels welcher ein Informationssignal (4) bezüglich mindestens eines ausführbaren Kann-Generator-Bremsmoments (b(t)) eines Generators (78) des Bremssystems empfangbar ist;
einer Generatorsteuereinrichtung (5), mittels welcher unter Berücksichtigung des Sensorsignals (2) und des Informationssignals (4) ein Soll-Generator-Bremsmoment des Generators (78) festlegbar und der Generator (78) entsprechend ansteuerbar ist; und
einer Ventilsteuereinrichtung (7), mittels welcher, sofern das festgelegte Soll-Generator-Bremsmoment gleich Null ist, mindestens ein Speicherkammer-Freischalt-Ventil (20a, 20b) eines Bremskreises (14a, 14b) des Bremssystems in eine erste Ventilstellung so steuerbar ist, dass eine Bremsflüssigkeitsverschiebung aus einem Hauptbremszylinder (10) des Bremssystems in mindestens eine Radbremszange (16a, 16b) des Bremskreises (14a, 14b) bewirkbar ist, während eine Bremsflüssigkeitsverschiebung aus dem Hauptbremszylinder (10) in eine Speicherkammer (18a, 18b) des Bremskreises (14a, 14b) unterbunden ist, und, sofern das festgelegte Soll-Generator-Bremsmoment ungleich Null ist, das mindestens eine Speicherkammer-Freischalt-Ventil (20a, 20b) in eine zweite Ventilstellung so steuerbar ist, dass eine Bremsflüssigkeitsverschiebung aus dem Hauptbremszylinder (10) in die Speicherkammer (18a, 18b) bewirkbar ist;
**dadurch gekennzeichnet, dass**
mittels der Generatorsteuereinrichtung (5) das Soll-Generator-Bremsmoment unter Berücksichtigung des Informationssignals (4) und einer Funktion (bx(t)) einer aus dem Sensorsignal (2) hergeleiteten Größe (x(t)) festlegbar ist, wobei ein Maximum der Funktion (bx(t)) bei einer aus dem Sensorsignal (2) hergeleiteten Größe (x(t)) gleich einer Mindestbetätigungsstärke (xmin), ab welcher eine auf das Bremsbetätigungselement (22) aufgebrachte Fahrerbremskraft auf einen verstellbaren Hauptbremszylinder-Kolben des Hauptbremszylinders (10) übertragbar ist, liegt.

2. Steuervorrichtung (80) nach Anspruch 1, wobei die Generatorsteuereinrichtung (5) zusätzlich dazu ausgelegt ist, das Größte der ausführbaren Kann-Generator-Bremsmomente (b(t)), welche noch kleiner oder gleich der Funktion (bx(t)) der aus dem Sensorsignal (2) hergeleiteten Größe (x(t)) sind, als Soll-Generator-Bremsmoment festzulegen.

3. Steuervorrichtung (80) nach Anspruch 1 oder 2, wobei die Steuervorrichtung (80) zusätzlich eine Pumpensteuereinrichtung umfasst, mittels welcher ein Soll-Pumpmodus einer Pumpe (46a, 46b) des Bremskreises (14a, 14b), mittels welcher Bremsflüssigkeit aus der Speicherkammer (18a, 18b) des Bremskreises (14a, 14b) zu der mindestens einen Radbremszange (16a, 16b) des Bremskreises (14a, 14b) pumpbar ist, unter Berücksichtigung einer zeitlichen Abnahme des Soll-Generator-Bremsmoments festlegbar und die Pumpe (46a, 46b) entsprechend ansteuerbar ist.

4. Bremssystem für ein Fahrzeug mit:
einer Steuervorrichtung (80) nach einem der vorhergehenden Ansprüche;
einem Hauptbremszylinder (10); und
mindestens einem mit dem Hauptbremszylinder (10) hydraulisch verbundenen Bremskreis (14a, 14b) mit mindestens einer Radbremszange (16a, 16b), einer Speicherkammer (18a, 18b) und mindestens einem Speicherkammer-Freischalt-Ventil (20a, 20b), wobei bei einem Vorliegen des mindestens einen Speicherkammer-Freischalt-Ventils (20a, 20b) in einer ersten Ventilstellung eine Bremsflüssigkeitsverschiebung aus dem Hauptbremszylinder (10) in die mindestens eine Radbremszange (16a, 16b) bewirkbar ist, während eine Bremsflüssigkeitsverschiebung aus dem Hauptbremszylinder (10) in die Speicherkammer (18a, 18b) unterbunden ist, und bei einem Vorliegen des mindestens einen Speicherkammer-Freischalt-Ventils (20a, 20b) in einer zweiten Ventilstellung eine Bremsflüssigkeitsverschiebung aus dem Hauptbremszylinder (10) in die Speicherkammer (18a, 18b) bewirkbar ist.

5. Bremssystem nach Anspruch 4, wobei das Bremssystem ein Bremsbetätigungselement (22) umfasst, welches derart an dem Hauptbremszylinder (10) angeordnet ist, dass bei einem Betätigen des Bremsbetätigungselements (22) mit zumindest der Mindestbetätigungsstärke (xmin) eine auf das Bremsbetätigungselement (22) aufgebrachte Fahrerbremskraft auf einen verstellbaren Hauptbremszylinder-Kolben des Hauptbremszylinders (10) so übertragbar ist, dass der Hauptbremszylinder-Kolben mittels der Fahrerbremskraft verstellbar ist, wobei während des Betätigens des Bremsbetätigungselements (22) mit einer Betätigungsstärke (x(t)) ungleich Null aber unter der Mindestbetätigungsstärke (xmin) eine Kraftübertragung zwischen dem Bremsbetätigungselement (22) und dem Hauptbremszylinder-Kolben unterbunden ist.

6. Bremssystem nach Anspruch 5, wobei das Bremssystem einen Bremskraftverstärker (24) umfasst, mittels welchem zumindest während des Betätigens des Bremsbetätigungselements (22) unter der Mindestbetätigungsstärke (xmin) der Hauptbremszylinder-Kolben so verstellbar ist, dass ein Bremsflüssigkeitsvolumen aus dem Hauptbremszylinder (10) wahlweise in die Speicherkammer (18a, 18b) oder in die mindestens eine Radbremszange (16a, 16b) verschiebbar ist.

7. Bremssystem nach einem der Ansprüche 4 bis 6, wobei das mindestens eine Speicherkammer-Freischalt-Ventil (20a, 20b) mindestens ein Radauslassventil umfasst, welches mittels der Ventilsteuereinrichtung in eine geschlossenen Stellung als erste Ventilstellung und in eine zumindest teilgeöffnete Stellung als zweite Ventilstellung steuerbar ist.

8. Bremssystem nach einem der Ansprüche 4 bis 6, wobei bei einem Vorliegen des mindestens einen Speicherkammer-Freischalt-Ventils (20a, 20b) in der zweiten Ventilstellung eine Bremsflüssigkeitsverschiebung aus dem Hauptbremszylinder (10) in die mindestens eine Radbremszange (16a, 16b) unterbunden ist.

9. Verfahren zum Betreiben eines Bremssystems eines Fahrzeugs mit den Schritten:
Festlegen eines Soll-Generator-Bremsmoments unter Berücksichtigung einer Betätigungsstärkegröße bezüglich einer Betätigungsstärke (x(t)) einer Betätigung eines Bremsbetätigungselements (22) des Bremssystems und einer Information bezüglich mindestens eines ausführbaren Kann-Generator-Bremsmoments (b(t)) eines Generators (78) des Bremssystems (S1);
Ansteuern des Generators (78) unter Berücksichtigung des festgelegten Soll-Generator-Bremsmoments (S2);
sofern das festgelegte Soll-Generator-Bremsmoment gleich Null ist, Steuern mindestens eines Speicherkammer-Freischalt-Ventils (20a, 20b) eines Bremskreises (14a, 14b) des Bremssystems in eine erste Ventilstellung, wodurch eine Bremsflüssigkeitsverschiebung aus einem Hauptbremszylinder (10) des Bremssystems in mindestens eine Radbremszange (16a, 16b) des Bremskreises (14a, 14b) bewirkt wird, während eine Bremsflüssigkeitsverschiebung aus dem Hauptbremszylinder (10) in eine Speicherkammer (18a, 18b) des Bremskreises (14a, 14b) unterbunden wird (S3), und, sofern das festgelegte Soll-Generator-Bremsmoment ungleich Null ist, Steuern des mindestens einen Speicherkammer-Freischalt-Ventils (20a, 20b) in eine zweite Ventilstellung, wodurch eine Bremsflüssigkeitsverschiebung aus dem Hauptbremszylinder (10) in die Speicherkammer (18a, 18b) bewirkt wird (S4);
**gekennzeichnet durch** die Schritte:
Erkennen einer gesteigerten Betätigungsstärkegröße bezüglich einer gesteigerten Betätigungsstärke (x(t)) der Betätigung des Bremsbetätigungselements (22);
Vergleichen der gesteigerten Betätigungsstärkegröße mit einem Schwellwert bezüglich einer Mindestbetätigungsstärke (xmin), ab welcher eine auf das Bremsbetätigungselement (22) aufgebrachte Fahrerbremskraft auf einen verstellbaren Hauptbremszylinder-Kolben des Hauptbremszylinders (10) übertragbar wird; und
, sofern die gesteigerte Betätigungsstärkegröße den Schwellwert überschreitet, Konstanthalten oder Reduzieren des Soll-Generator-Bremsmoments trotz der gesteigerten Betätigungsstärkegröße (S1).

10. Verfahren nach Anspruch 9, wobei, sofern die gesteigerte Betätigungsstärkegröße unter dem Schwellwert liegt, ein gesteigertes Generator-Bremsmoment unter Berücksichtigung der gesteigerten Betätigungsstärkegröße ermittelt wird und das Größte der ausführbaren Kann-Generator-Bremsmomente (b(t)), welche noch kleiner oder gleich dem gesteigerten Generator-Bremsmoment sind, als Soll-Generator-Bremsmoment festgelegt wird.

11. Verfahren nach Anspruch 9 oder 10, wobei ein Soll-Pumpmodus einer Pumpe (46a, 46b) des Bremskreises (14a, 14b) unter Berücksichtigung einer zeitlichen Abnahme des Soll-Generator-Bremsmoments festgelegt und die Pumpe (46a, 46b) so gesteuert wird, dass Bremsflüssigkeit aus der Speicherkammer (18a, 18b) des Bremskreises (14a, 14b) zu der mindestens einen Radbremszange (16a, 16b) des Bremskreises (14a, 14b) gepumpt wird.

## Claims

1. Control device (80) for a brake system of a vehicle, having:
a first receiver device (1), by means of which a sensor signal (2) relating to an activation intensity (x(t)) of activation of a brake activation element (22) of the brake system can be received;
a second receiver device (3), by means of which an information signal (4) relating to at least one executable available generator braking torque (b(t)) of a generator (78) of the brake system can be received;
a generator control device (5), by means of which a setpoint generator braking torque of the generator (78) can be defined taking into account the sensor signal (2) and the information signal (4), and the generator (78) can be correspondingly actuated; and
a valve control device (7), by means of which, provided that the defined setpoint generator braking torque is equal to zero, at least one storage-chamber-clearing valve (20a, 20b) of a brake circuit (14a, 14b) of the brake system can be controlled into a first valve position in such a way that a displacement of brake fluid can be brought about from a master brake cylinder (10) of the brake system into at least one wheel brake calliper (16a, 16b) of the brake circuit (14a, 14b), while a displacement of brake fluid from the master brake cylinder (10) into a storage chamber (18a, 18b) of the brake circuit (14a, 14b) is prohibited, and, in so far as the defined setpoint generator braking torque is unequal to zero, the at least one storage-chamber-clearing valve (20a, 20b) can be controlled into a second valve position in such a way that a displacement of brake fluid from the master brake cylinder (10) into the storage chamber (18a, 18b) can be brought about;
**characterized in that**
the setpoint generator braking torque can be defined by means of the generator control device (5) taking into account the information signal (4) and a function (bx(t)) of a variable (x(t)) derived from the sensor signal (2), wherein a maximum of the function (bx(t)) occurs in the case of a variable (x(t)) which is derived from the sensor signal (2) and is equal to a minimum activation intensity (xmin), starting from which a driver's braking force which is applied to the braking activation element (22) can be transmitted to an adjustable master brake cylinder piston of the master brake cylinder (10).

2. Control device (80) according to Claim 1, wherein the generator control device (5) is additionally configured to define the maximum of the executable available generator braking torques (b(t)) which are still smaller than or equal to the function (bx(t)) of the variable (x(t)) derived from the sensor signal (2), as a setpoint generator braking torque.

3. Control device (80) according to Claim 1 or 2, wherein the control device (80) additionally comprises a pump control device, by means of which a setpoint pumping mode of a pump (46a, 46b) of the brake circuit (16a, 16b), by means of which pump (46a, 46b) brake fluid can be pumped from the storage chamber (18a, 18b) of the brake circuit (14a, 14b) to the at least one wheel brake calliper (16a, 16b) of the brake circuit (14a, 14b), can be defined taking into account a reduction in the setpoint generator braking torque over time, and the pump (46a, 46b) can be correspondingly actuated.

4. Brake system for a vehicle having:
a control device (80) according to one of the preceding claims;
a master brake cylinder (10); and
at least one brake circuit (14a, 14b) which is hydraulically connected to the master brake cylinder (10) and has at least one wheel brake calliper (16a, 16b) of a storage chamber (18a, 18b) and at least one storage-chamber-clearing valve (20a, 20b), wherein when the at least one storage-chamber-clearing valve (20a, 20b) is present in a first valve position a displacement of brake fluid can be brought about from the master brake cylinder (10) into the at least one wheel brake calliper (16a, 16b), while a displacement of brake fluid from the master brake cylinder (10) into the storage chamber (18a, 18b) is prohibited, and when the at least one storage-chamber-clearing valve (20a, 20b) is present in a second valve position a displacement of brake fluid can be brought about from the master brake cylinder (10) into the storage chamber (18a, 18b).

5. Brake system according to Claim 4, wherein the brake system comprises a brake activation element (22) which is arranged on the master brake cylinder (10) in such a way that when the brake activation element (22) is activated with at least the minimum activation intensity (xmin) a driver's braking force, applied to the brake activation element (22), can be transmitted to an adjustable master brake cylinder piston of the master brake cylinder (10) in such a way that the master brake cylinder piston can be adjusted by means of the driver's braking force, wherein during the activation of the brake activation element (22) with an activation intensity (x(t)) which is unequal to zero but below the minimum activation intensity (xmin) a transmission of force between the brake activation element (22) and the master brake cylinder piston is prohibited.

6. Brake system according to Claim 5, wherein the brake system comprises a brake booster (24) by means of which the master brake cylinder piston can be adjusted at least during the activation of the brake activation element (22) below the minimum activation intensity (xmin), in such a way that a brake fluid volume can be displaced from the master brake cylinder (10) optionally into the storage chamber (18a, 18b) or into the at least one wheel brake calliper (16a, 16b).

7. Brake system according to one of Claims 4 to 6, wherein the at least one storage-chamber-clearing valve (20a, 20b) comprises at least one wheel outlet valve which can be controlled by means of the valve control device into a closed position as a first valve position, and into an at least partially opened position as a second valve position.

8. Brake system according to one of Claims 4 to 6, wherein when the at least one storage-chamber-clearing valve (20a, 20b) is present in the second valve position a displacement of brake fluid from the master brake cylinder (10) into the at least one wheel brake calliper (16a, 16b) is prohibited.

9. Method for operating a brake system of a vehicle having the steps:
defining a setpoint generator braking torque taking into account an activation intensity variable relating to an activation intensity (x(t)) of activation of a brake activation element (22) of the brake system and taking into account information relating to at least one executable available generator braking torque (b(t)) of a generator (78) of the brake system (S1);
actuating the generator (78) taking into account the defined setpoint generator braking torque (S2);
in so far as the defined setpoint generator braking torque is equal to zero, controlling at least one storage-chamber-clearing valve (20a, 20b) of a brake circuit (14a, 14b) of the brake system into a first valve position, as a result of which a displacement of brake fluid from a master brake cylinder (10) of the brake system into at least one wheel brake calliper (16a, 16b) of the brake circuit (14a, 14b) is brought about, while a displacement of brake fluid from the master brake cylinder (10) into a storage chamber (18a, 18b) of the brake circuit (14a, 14b) is prohibited (S3), and in so far as the defined setpoint generator braking torque is unequal to zero, controlling the at least one storage-chamber-clearing valve (20a, 20b) into a second valve position, as a result of which a displacement of brake fluid is brought about from the master-brake cylinder (10) into the storage chamber (18a, 18b) (S4);
**characterized by** the steps:
detecting an increased activation intensity variable relating to an increased activation intensity (x(t)) of the activation of the brake activation element (22);
comparing the increased activation intensity variable with a threshold value relating to a minimum activation intensity (xmin), starting from which a driver's braking force applied to the brake activation element (22) can be transmitted to an adjustable master brake cylinder piston of the master brake cylinder (10); and
in so far as the increased activation intensity variable exceeds the threshold value, keeping constant or reducing the setpoint generator braking torque despite the increased activation intensity variable (S1).

10. Method according to Claim 9, wherein the increased activation intensity variable is below the threshold value, an increased generator braking torque is determined taking into account the increased activation intensity variable, and the maximum of the executable available generator braking torques (b(t)) which are still smaller than or equal to the increased generator braking torque is defined as a setpoint generator braking torque.

11. Method according to Claim 9 or 10, wherein a setpoint pumping mode of a pump (46a, 46b) of the brake circuit (14a, 14b) is defined taking into account a decrease in the setpoint generator braking torque over time, and the pump (46a, 46b) is controlled in such a way that brake fluid is pumped from the storage chamber (18a, 18b) of the brake circuit (14a, 14b) to the at least one wheel brake calliper (16a, 16b) of the brake circuit (14a, 14b).

## Revendications

1. Dispositif de commande (80) pour un système de freinage d'un véhicule comprenant :
un premier dispositif de réception (1) au moyen duquel peut être reçu un signal de capteur (2) concernant une intensité d'actionnement (x(t)) d'un actionnement d'un élément d'actionnement de frein (22) du système de freinage ;
un deuxième dispositif de réception (3) au moyen duquel peut être reçu un signal d'information (4) concernant au moins un moment de freinage de générateur possible (b(t)) exécutable d'un générateur (78) du système de freinage ;
un dispositif de commande de générateur (5), au moyen duquel un moment de freinage de générateur de consigne du générateur (78) peut être défini en tenant compte du signal de capteur (2) et du signal d'information (4) et le générateur (78) peut être commandé en conséquence ; et
un dispositif de commande de vanne (7) au moyen duquel, sous réserve que le moment de freinage de générateur de consigne défini est égal à zéro, au moins une vanne de déconnexion de chambre d'accumulation (20a, 20b) d'un circuit de freinage (14a, 14b) du système de freinage peut être commandée dans une première position de vanne de telle sorte qu'il est possible de produire un déplacement de liquide de frein depuis un maître-cylindre de frein (10) du système de freinage dans au moins une mâchoire de frein de roue (16a, 16b) du circuit de freinage (14a, 14b), alors qu'un déplacement de liquide de frein depuis le maître-cylindre de frein (10) dans une chambre d'accumulation (18a, 18b) du circuit de freinage (14a, 14b) est inhibé, et sous réserve que le moment de freinage de générateur de consigne défini est différent de zéro, l'au moins une vanne de déconnexion de chambre d'accumulation (20a, 20b) peut être commandée dans une deuxième position de vanne de telle sorte qu'il est possible de produire un déplacement de liquide de frein depuis le maître-cylindre de frein (10) dans la chambre d'accumulation (18a, 18b) ;
**caractérisé en ce que**
le moment de freinage de générateur de consigne peut être défini au moyen du dispositif de commande de générateur (5) en tenant compte du signal d'information (4) et d'une fonction (bx(t)) d'une grandeur (x(t)) dérivée du signal de capteur (2), un maximum de la fonction (bx(t)) se trouvant au niveau d'une grandeur (x(t)) dérivée du signal de capteur (2) égale à une intensité d'actionnement minimale (xmin) à partir de laquelle une force de freinage de conducteur appliquée sur l'élément d'actionnement de frein (22) peut être transmise à un piston de maître-cylindre de frein mobile du maître-cylindre de frein (10).

2. Dispositif de commande (80) selon la revendication 1, avec lequel le dispositif de commande de générateur (5) est en plus conçu pour définir en tant que moment de freinage de générateur de consigne le plus grand des moments de freinage de générateur possibles (b(t)) exécutables qui sont encore inférieurs ou égaux à la fonction (bx(t)) de la grandeur (x(t)) dérivée du signal de capteur (2).

3. Dispositif de commande (80) selon la revendication 1 ou 2, avec lequel le dispositif de commande (80) comprend en plus un dispositif de commande de pompe au moyen duquel peut être défini un mode de pompage de consigne d'une pompe (46a, 46b) du circuit de freinage (14a, 14b), à l'aide de laquelle du liquide de frein peut être pompé depuis la chambre d'accumulation (18a, 18b) du circuit de freinage (14a, 14b) vers l'au moins une mâchoire de frein de roue (16a, 16b) du circuit de freinage (14a, 14b), en tenant compte d'une diminution dans le temps du moment de freinage de générateur de consigne, et la pompe (46a, 46b) peut être commandée en conséquence.

4. Système de freinage pour un véhicule comprenant :
un dispositif de commande (80) selon l'une des revendications précédentes ;
un maître-cylindre de frein (10) ; et
au moins un circuit de freinage (14a, 14b) relié hydrauliquement avec le maître-cylindre de frein (10),
comprenant au moins une mâchoire de frein de roue (16a, 16b), une chambre d'accumulation (18a, 18b) et au moins une vanne de déconnexion de chambre d'accumulation (20a, 20b), un déplacement de liquide de frein depuis le maître-cylindre de frein (10) dans l'au moins une mâchoire de frein de roue (16a, 16b) pouvant être produit lorsque l'au moins une vanne de déconnexion de chambre d'accumulation (20a, 20b) se trouve dans une première position de vanne, alors qu'un déplacement de liquide de frein depuis le maître-cylindre de frein (10) dans la chambre d'accumulation (18a, 18b) est inhibé, et lorsque l'au moins une vanne de déconnexion de chambre d'accumulation (20a, 20b) se trouve dans une deuxième position de vanne, un déplacement de liquide de frein depuis le maître-cylindre de frein (10) dans la chambre d'accumulation (18a, 18b) pouvant être produit.

5. Système de freinage selon la revendication 4, avec lequel le système de freinage comprend un élément d'actionnement de frein (22) qui est disposé sur le maître-cylindre de frein (10) de telle sorte que lors d'un actionnement de l'élément d'actionnement de frein (22) avec au moins l'intensité d'actionnement minimale (xmin), une force de freinage de conducteur appliquée sur l'élément d'actionnement de frein (22) peut être transmise à un piston de maître-cylindre de frein mobile du maître-cylindre de frein (10) de telle sorte que le piston de maître-cylindre de frein peut être déplacé au moyen de la force de freinage de conducteur, une transmission de force entre l'élément d'actionnement de frein (22) et le piston de maître-cylindre de frein étant inhibée pendant l'actionnement de l'élément d'actionnement de frein (22) avec une force d'actionnement (x(t)) différente de zéro, mais inférieure à l'intensité d'actionnement minimale (xmin).

6. Système de freinage selon la revendication 5, avec lequel le système de freinage comprend un servofrein (24) au moyen duquel le piston de maître-cylindre de frein peut être déplacé au moins pendant l'actionnement de l'élément d'actionnement de frein (22) au-dessous de l'intensité d'actionnement minimale (xmin) de telle sorte qu'un volume de liquide de frein peut être déplacé depuis le maître-cylindre de frein (10) au choix dans la chambre d'accumulation (18a, 18b) ou dans l'au moins une mâchoire de frein de roue (16a, 16b).

7. Système de freinage selon l'une des revendications 4 à 6, avec lequel l'au moins une vanne de déconnexion de chambre d'accumulation (20a, 20b) comprend au moins une vanne de sortie de roue qui peut être commandée au moyen du dispositif de commande de vanne dans une position fermée en tant que première position de vanne et dans une position au moins partiellement ouverte en tant que deuxième position de vanne.

8. Système de freinage selon l'une des revendications 4 à 6, avec lequel lorsque l'au moins une vanne de déconnexion de chambre d'accumulation (20a, 20b), dans la deuxième position de vanne, se trouve un déplacement de liquide de frein depuis le maître-cylindre de frein (10) dans l'au moins une mâchoire de frein de roue (16a, 16b) est inhibé.

9. Procédé pour faire fonctionner un système de freinage d'un véhicule, comprenant les étapes suivantes :
définition d'un moment de freinage de générateur de consigne en tenant compte d'une grandeur d'intensité d'actionnement concernant une intensité d'actionnement (x(t)) d'un actionnement d'un élément d'actionnement de frein (22) du système de freinage et d'une information concernant au moins un moment de freinage de générateur possible (b(t)) exécutable d'un générateur (78) du système de freinage (S1) ;
commande du générateur (78) en tenant compte du moment de freinage de générateur de consigne défini (S2) ;
sous réserve que le moment de freinage de générateur de consigne défini est égal à zéro, commande d'au moins une vanne de déconnexion de chambre d'accumulation (20a, 20b) d'un circuit de freinage (14a, 14b) du système de freinage dans une première position de vanne, ce qui produit un déplacement de liquide de frein depuis un maître-cylindre de frein (10) du système de freinage dans au moins une mâchoire de frein de roue (16a, 16b) du circuit de freinage (14a, 14b), alors qu'un déplacement de liquide de frein depuis le maître-cylindre de frein (10) dans une chambre d'accumulation (18a, 18b) du circuit de freinage (14a, 14b) est inhibé (S3), et sous réserve que le moment de freinage de générateur de consigne défini est différent de zéro, commande de l'au moins une vanne de déconnexion de chambre d'accumulation (20a, 20b) dans une deuxième position de vanne, ce qui produit un déplacement de liquide de frein depuis le maître-cylindre de frein (10) dans la chambre d'accumulation (18a, 18b) (S4) ;
**caractérisé par** les étapes suivantes :
détection d'une grandeur d'intensité d'actionnement accrue concernant une intensité d'actionnement accrue (x(t)) de l'actionnement de l'élément d'actionnement de frein (22) ;
comparaison de la grandeur d'intensité d'actionnement accrue avec une valeur de seuil concernant une intensité d'actionnement minimale (xmin) à partir de laquelle une force de freinage de conducteur appliquée sur l'élément d'actionnement de frein (22) peut être transmise à un piston de maître-cylindre de frein mobile du maître-cylindre de frein (10) ; et
sous réserve que la grandeur d'intensité d'actionnement accrue dépasse la valeur de seuil, maintien constant ou réduction du moment de freinage de générateur de consigne malgré la grandeur d'intensité d'actionnement accrue (S1).

10. Procédé selon la revendication 9, selon lequel, sous réserve que la grandeur d'intensité d'actionnement accrue est inférieure à la valeur de seuil, un moment de freinage de générateur accru est déterminé en tenant compte de la grandeur d'intensité d'actionnement accrue et le plus grand des moments de freinage de générateur possibles (b(t)) exécutables qui sont encore inférieurs ou égaux au moment de freinage de générateur accru est défini en tant que moment de freinage de générateur de consigne.

11. Procédé selon la revendication 9 ou 10, selon lequel un mode de pompage de consigne d'une pompe (46a, 46b) du circuit de freinage (14a, 14b) est défini en tenant compte d'une diminution dans le temps du moment de freinage de générateur de consigne, et la pompe (46a, 46b) est commandée de telle sorte que du liquide de frein est pompé depuis la chambre d'accumulation (18a, 18b) du circuit de freinage (14a, 14b) vers l'au moins une mâchoire de frein de roue (16a, 16b) du circuit de freinage (14a, 14b).
